# EUROPÄISCHE PATENTSCHRIFT

(11) **EP 4 276 458 B1**
(45) Veröffentlichungstag und Bekanntmachung des Hinweises auf die Patenterteilung: **01.05.2024**
(21) Anmeldenummer: 22172965.0
(22) Anmeldetag: 12.05.2022
(51) Int. Cl.: G01N 31/00, G01N 31/12, G01N 35/02, G01N 35/04, G01N 35/10

(54) **ANALYSEEINRICHTUNG FÜR DIE ELEMENTARANALYSE**
ANALYTIC DEVICE FOR ELEMENTARY ANALYSIS
DISPOSITIF D'ANALYSE POUR L'ANALYSE ÉLÉMENTAIRE

(43) Veröffentlichungstag der Anmeldung: 15.11.2023
(73) Patentinhaber: C. Gerhardt GmbH & Co. KG, 53639 Königswinter (DE)
(72) Erfinder: JEUB, Uwe, 53639 Königswinter (DE); WINTERSCHEIDT, Nina, 53639 Königswinter (DE); MÜLLER, Nils, 53572 Unkel (DE)
(74) Vertreter: Grünecker Patent- und Rechtsanwälte PartG mbB

(56) Entgegenhaltungen:
- EP-B1- 3 112 859
- JP-A- S 608 749
- JP-A- H02 257 062
- JP-A- 2010 008 245

## Beschreibung

Die vorliegende Erfindung betrifft eine Analyseeinrichtung für die Elementaranalyse und will das Einbringen von Proben in die Analyseeinrichtung verbessern.

Als gattungsgemäß wird eine Analyseeinrichtung für die Elementaranalyse mit einer Probenzuführeinrichtung angesehen. Die Probenzuführeinrichtung hat eine Einbringöffnung zum Einbringen einer Probe. Eine solche Analyseeinrichtung mit Probenzuführeinrichtung ist beispielsweise aus EP 3 112 859 B1 bekannt. Die Probenzuführeinrichtung dient dem Einbringen einer Probe in ein Analysegerät für die Elementaranalyse. Dazu ist eine Leitung für Sauerstoff und Trägergas vorgesehen. Des Weiteren hat die Analyseeinrichtung einen Reaktor für die katalytische Verbrennung einer Probe. Stromabwärts des Reaktors ist ein Reduktionsreaktor vorgesehen. Stromabwärts des Reduktionsreaktors ist ein Wasserabscheider vorgesehen. Stromabwärts des Wasserabscheiders ist ein Adsorber vorgesehen. Stromabwärts des Adsorbers ist ein Detektor vorgesehen. Des Weiteren ist eine Logikeinheit zur Verarbeitung von Daten vorgesehen, die von dem Detektor ermittelt werden.

Eine solche Analyseeinrichtung dient insbesondere der Bestimmung des Stickstoffgehaltes in einer Probe.

Bei dem zuvor erwähnten Stand der Technik gleitet ein Probenhalter über eine Grundplatte, wobei der Probenhalter linear bewegt wird, um eine vorbestimmte Probe über die Einbringöffnung zu bringen und von dort in den Reaktor abzuwerfen, wozu die vorbekannte Vorrichtung einen Einbringschacht aufweist. Dieser Einbringschacht erstreckt sich auch bei der vorliegenden Erfindung in Zuführrichtung hinter der Einbringöffnung.

Aus der JP S60 8749 A ist das Durchführen einer Gasanalyse durch Erhitzen eines Graphittegels bekannt, in den eine Probe einer bestimmten Menge eingeführt wird. Dabei wird die Probe in einem Probehalter platziert, welcher sich anschließend dreht, um die Probe in den Tiegel zu befördern.

Aus EP 3 112 859 B1 ist es bekannt, zwischen der Einbringöffnung und dem Reaktor einen Schiebekolben mit einer Aufnahmebohrung vorzusehen. Die zu analysierende Probe fällt durch die Einbringöffnung in die Aufnahmebohrung. Danach wird der Schiebekolben so verschoben, dass die Aufnahmebohrung mit dem Einbringschacht fluchtet, sodass die Probe aufgrund der Schwerkraft zugeführt wird.

Die vorbekannte Lösung benötigt einen gewissen Bauraum und hat sich als aufwendig erwiesen.

Die vorliegende Erfindung will eine Analyseeinrichtung angeben, mit welcher die zu analysierende Probe einfacher und jedoch ohne die Gefahr eines Einbringens von Fremdstoffen in die Elementaranalyse, dem Reaktor zugeführt werden kann.

Zur Lösung dieses Problems wird mit der vorliegenden Erfindung einer Analyseeinrichtung mit den Merkmalen von Anspruch 1 vorgeschlagen.

Diese Analyseeinrichtung dient auch vorliegend insbesondere zur quantitativen Beurteilung einer Probe hinsichtlich des Elementargehaltes, wobei die Probe insbesondere im Hinblick auf den Gehalt an Stickstoff untersucht werden soll.

Die zuvor bereits erwähnten Bestandteile der Analyseeinrichtung wurden mit Blick auf den Strömungsweg des Gases innerhalb der Analyseeinrichtung beim Analysieren einer Probe beschrieben, was nicht bedeutet, dass nach der vorliegenden Erfindung nicht auch weitere Elemente innerhalb der Analyseeinrichtung dazwischen oder dahinter geschaltet sein können. So kann - wie aus dem Stand der Technik bekannt - hinter dem Reduktionsreaktor eine Wasserfalle und/oder ein oder mehrere selbstregenerierbare Wasserabsorber vorgesehen sein, der aus dem Gas Wasser ausführt. Des Weiteren kann für die Abtrennung des Kohlendioxids aus dem Gasstrom eine Vorrichtung zur Regeneration von Adsorberelementen vorgesehen sein, welche zyklisch aus dem Gasstrom entnommen und der Desorption zugeführt werden können. Diese Regeneration kann außerhalb der eigentlichen Analyse oder innerhalb derselben erfolgen, wie dies beispielsweise aus EP 3 112 859 B1 oder EP 1 586 895 A1 bekannt ist.

Die Probenzuführung kann wie in EP 3 112 859 B1 über eine Lochfeldplatte erfolgen, die linear relativ zu einer Grundplatte bewegt wird, die mit der Einbringöffnung versehen ist. Die Probenzuführeinrichtung kann aber auch einen Probenhalter umfassen, der durch ein rotierendes Rad mit einer Vielzahl von auf dem Umfang mit gleichem Radius verteilt angeordneten Bohrungen ausgebildet ist, die hintereinander über die Einbringöffnung geführt werden, um die Probe jeweils mittels Schwerkraft in Richtung auf den Reaktor abzuwerfen.

Die erfindungsgemäße Analyseeinrichtung hat ein Verschlusselement, welches in dem Einbringschacht angeordnet ist. Das Verschlusselement befindet sich üblicherweise im Schwerefeld der Erde exakt unterhalb der Einbringöffnung. So fällt die durch die Einbringöffnung abgeworfene Probe in Richtung auf das Verschlusselement. Dieses Verschlusselement hat eine Probenaufnahmekammer, die angepasst ausgebildet ist, die abgeworfene Probe aufzunehmen. Die Probenaufnahmekammer ist einseitig verschlossen. Ein dafür vorgesehener Boden der Probenaufnahmekammer durchsetzt dementsprechend den Einbringschacht. In einer ersten Position des Einbringschachtes fluchtet die Probenaufnahmekammer üblicherweise mit der Einbringöffnung. Der Boden verschließt den Einbringschacht unterseitig. So wird die abgeworfene Probe nicht durch den Einbringschacht direkt in den Reaktor abgeworfen. Auch der Reaktor befindet sich üblicherweise im Schwerefeld der Erde exakt unterhalb der Einbringöffnung und damit auch üblicherweise unterhalb des Verschlusselements. Vielmehr wird diese temporär in der Probenaufnahmekammer aufgenommen. Das Verschlusselement ist verschwenkbar gelagert, und zwar üblicherweise in einem Verschlusselementgehäuse. In einer zweiten Position, in der das Verschlusselement gegenüber der ersten Position verschwenkt ist, wird die Probenaufnahmekammer zu dem Reaktor geöffnet. Der Boden der Probenaufnahmekammer verschließt dann den Reaktor oberseitig. So unterbleibt zu jeder Zeit eine unmittelbare strömungstechnische Verbindung zwischen der Einbringöffnung und dem Reaktor. Zwischen der ersten und der zweiten Position wird das Verschlusselement etwa um 180° +/- 20° verschwenkt. Es kommt auf das Öffnen, Schließen und Abwerfen und danach die Wirkung der Rotationsbewegung an und nicht so sehr auf den dabei zurückgelegten Schwenkweg.

Im Gegensatz zu dem Stand der Technik, bei dem die zu analysierende Probe vor dem Einwerfen in den Reaktor translatorisch und quer zu dem Einbringschacht bewegt wird, reicht für das Abwerfen der Probe mit der erfindungsgemäßen Analyseeinrichtung eine Verschwenkbewegung des Verschlusselementes.

Die dazu notwendige Verschwenkbewegung kann manuell erfolgen. Dazu hat das Verschlusselement üblicherweise nach Art einer Schraube auf Höhe der Schwenkachse des Verschlusselementes vorgesehene Funktionsflächen, mit welchen das Verschlusselement manuell um 180° verschwenkt werden kann. Solche Funktionsflächen können auch im Falle eines Antriebs für das Verschwenken des Verschlusselementes vorgesehen sein, sofern der Antrieb gestört ist oder aus welchen Gründen auch immer überbrückt werden soll.

Als Antrieb kommt grundsätzlich jede Art von Antrieb in Betracht, so beispielsweise ein pneumatischer Antrieb oder ein elektrischer Antrieb.

Die erfindungsgemäße Lösung erlaubt vor allem eine leichtere Abdichtung des Verschlusselementes, da gegenüber dem Stand der Technik das Verschlusselement lediglich rotatorisch bewegt wird. So kann auf bekannte Dichtungen eines insbesondere zylindrischen Verschlusselementes innerhalb eines Verschlusselementgehäuses mit einer zylindrischen Bohrung zurückgegriffen werden. Es sind Dichtungen denkbar, die sich in axialer Richtung lediglich über eine Teillänge des Verschlusselementes und/oder des Verschlusselementgehäuses erstrecken. Dabei können beiderseits der Probenaufnahmekammer jeweils Dichtelemente vorgesehen sein, die beispielweise in einer Nut angeordnet sein können, die in dem Verschlusselement und/oder dem Verschlusselementgehäuse und/oder einer Dichtung ausgespart sind.

Als besonders wirkungsvoll insbesondere unter Beachtung der hohen Dichtigkeit unter Vermeidung von Verunreinigungen, die durch das Abdichten in den Reaktor eingebracht werden können, wird ein Dichtkörper als bevorzugte Weiterbildung vorgeschlagen, der aus einem Fluorelastomer gebildet ist. Ein solcher Dichtkörper kann beispielweise aus Viton bestehen. Ein solcher Dichtkörper nimmt üblicherweise das Verschlusselement beiderseits des Einbringschachtes vollumfänglich in sich auf. Bevorzugt ist der Dichtkörper so ausgebildet, dass dieser benachbart zu dem Einbringschacht das Verschlusselement vollständig in sich aufnimmt und lediglich den Einbringschacht freilässt.

Dieser wird gemäß einer bevorzugten Weiterbildung der vorliegenden Erfindung durch zumindest eine Edelstahlhülse gebildet, die die Dichtung respektive den Dichtkörper durchsetzt. So liegt die Edelstahlhülse üblicherweise auch außenumfänglich an dem Dichtkörper an und ist in diesem aufgenommen.

Nach einer bevorzugten Weiterbildung der vorliegenden Erfindung befindet sich eine erste Edelstahlhülse zwischen der Einbringöffnung und dem Verschlusselement. Dabei ist das obere, benachbart zu der Einbringöffnung vorgesehene Ende dieser ersten Edelstahlhülse üblicherweise unmittelbar unterhalb der Grundplatte vorgesehen. Das gegenüber liegende untere Ende der Edelstahlhülse ist üblicherweise konkav ausgeschnitten, sodass zwischen der Außenumfangsfläche des zylindrischen Verschlusselements und dem unteren Ende der ersten Edelstahlhülse nur ein geringer Spalt verbleibt. Mit Edelstahl ist dabei ein auch chemisch recht stabiles Material angegeben.

In gleicher Weise befindet sich bevorzugt hinter dem Verschlusselement eine zweite Edelstahlhülse, die jedenfalls auch teilweise von dem Dichtkörper umgeben ist und bis an das Verschlusselement reicht.

Im Hinblick auf eine lange Standzeit wird gemäß einer bevorzugten Weiterbildung der vorliegenden Erfindung vorgeschlagen, dass das Verschlusselement zumindest eine an seinem Außenumfang ausgesparte Nut aufweist. Diese Nut befindet sich üblicherweise in axialer Richtung benachbart zu der Probenaufnahmekammer, d. h. seitlich neben der Probenaufnahmekammer. Die Nut ist mit einer Schmierpaste, bevorzugt mit einer Schmierpaste aus Silikon ausgefüllt. Diese Schmierpaste verbessert die Schmierung gegenüber der Dichtung beziehungsweise dem Dichtkörper. Üblicherweise sind beidseitig der Probenaufnahmekammer umfänglich umlaufende Nuten an dem Verschlusselement ausgespart, die in entsprechender Weise mit der Schmierpaste ausgefüllt sind.

Nach der vorliegenden Erfindung ist ein Schieber verschieblich in der Grundplatte vorgesehen, der mit der Einbringöffnung zusammenwirkt und diese freigeben oder verschließen kann. Der Schieber ist mit dem Verschlusselement mechanisch zwangsgekoppelt, sodass sich der Schieber zwangsläufig mitbewegt, wenn das Verschlusselement verschwenkt wird. Dazu ist erfindungsgemäß ein Mitnehmer vorgesehen, der mit dem Schieber mechanisch gekoppelt ist. Die Kopplung ist derart, dass der Schieber in der ersten Position des Verschlusselementes die Einbringöffnung frei lässt und in der zweiten Position des Verschlusselementes die Einbringöffnung verschließt. Dabei kann der Schieber federvorgespannt sein, sodass bei fehlender Anlage des Mitnehmers an dem Schieber dieser sich in seiner die Einbringöffnung verschließenden Stellung befindet. So muss der Schieber durch Betätigen des Verschlusselementes aktiv in seine geöffnete Stellung verbracht werden. Beim Verschwenken des Verschlusselementes zum Abwerfen der Probe in den Reaktor verschließt der Schieber zwangsläufig die Einbringöffnung. Der Schieber weißt über der Abwurfposition ein Spülloch auf. Dieses Spülloch wird zur Evakuierung der Probenkammer im Probengestell verwendet.

Zwischen der Einbringöffnung und dem Verschlusselement ist gemäß einer bevorzugten Weiterbildung der vorliegenden Erfindung eine Spülöffnung vorgesehen. Diese Spülöffnung ist üblicherweise zwischen der Einbringöffnung und dem Verschlusselement vorgesehen. Die Spülöffnung muss derart ausgeformt sein, dass die komplette Einbringöffnung, Probenabwurfkammer und das Probengestell vollständig durchspült werden. Dazu wird das Spülgas über Nuten in der Edelstahlhülse bis zum unteren Ende der Einbringöffnung geführt und dort an zwei Punkten in die Einbringöffnung dosiert. Durch diese Spülöffnung wird konstant ein Spülgas, insbesondere ein inertes Gas wie Helium eingebracht. Das Spülen erfolgt mit dem Ziel, die Atmosphärenluft vollständig aus dem Einbringschacht zu drängen und den Einbringschacht mit dem Spülgas zu fluten, bevor das Verschlusselement um 180° in die zweite Position verschwenkt wird, um die Probe in den Reaktor abzuwerfen. Der Schieber und Verschlusselement sind so miteinander gekoppelt, dass der Schieber geschlossen steht wenn das Verschlusselement mit der Probenaufnahmekammer zum Reaktor zeigt. Um die Probe in einer kompletten Inertgasphase in den Reaktor überführen zu können, muss die Probe auf dem Schieber platziert werden, bevor sie in die Probenaufnahmekammer fallen gelassen wird. Durch das Spülloch im Schieber wird die auf dem Schieber platzierte Probenkammer im Gestell komplett gespült.

In Abwurfrichtung hinter dem Verschlusselement befindet sich üblicherweise eine weitere Öffnung zum Einbringen eines Träger- und/oder Prozessgases, welches in den Reaktor eingebracht wird.

Gemäß einer bevorzugten Weiterbildung der vorliegenden Erfindung ist zwischen dem Verschlusselement und einer zwischen der Einbringöffnung und dem Verschlusselement vorgesehenen und den Einbringschacht zumindest teilweise ausbildenden Hülse eine Spülführung ausgebildet. Diese Spülführung kommuniziert mit der zuvor erwähnten Spülöffnung und endet unterseitig im Bereich des Verschlusselementes. Die Spülführung erstreckt sich zumindest über eine gewisse axiale Länge der Hülse, die eine Edelstahlhülse sein kann. Die Hülse endet üblicherweise unmittelbar an der Außenumfangsfläche des Verschlusselementes und folgt der Kontur des Verschlusselementes. Entsprechend endet die Spülführung in Abwurfrichtung der Probe am unteren Ende desjenigen Abschnitts des Einbringschachtes, der oberhalb des Verschlusselementes vorgesehen ist und der der Probenzuführeinrichtung zugeordnet ist. So wird beim Zuführen eines Spülmediums der gesamte oberhalb des Verschlusselementes befindliche Bereich gespült.

Sofern der zuvor erwähnte Schieber des Weiteren mit einer Spülbohrung durchsetzt ist, kann das Spülmedium über den Einbringschacht hinaus und entgegen der Abwurfrichtung geführt werden, so dass das Spülmedium auch eine auf der gegenüberliegenden Seite des Schiebers vorgesehene Probenabwurfkammer durchspült und somit verhindert, dass darin enthaltene Gase beim Abwurf der Probe mitgeschleppt werden, die das Messergebnis verfälschen können.

Gemäß einer bevorzugten Weiterbildung der vorliegenden Erfindung ist der Einbringschacht zwischen der Probenzuführeinrichtung und dem Reaktor trennbar. Dabei ist die Probenzuführeinrichtung zum Freilegen eines reaktorseitigen Abschnitts des Einbringschachtes relativ zu dem Reaktor beweglich. Diese Weiterbildung erfolgt im Hinblick darauf, dass ein in dem Reaktor befindliches Reaktorgefäß, welches üblicherweise rohrförmig ausgestaltet und so in dem Reaktor angeordnet ist, dass die Längsachse des Reaktorgefäßes im Wesentlichen mit der Abwurfrichtung der Probe fluchtet, zur Wartungszwecken aus dem Reaktor ausgebaut werden muss. Dazu ist es erforderlich, die Probenzuführeinrichtung oberhalb des Reaktors und in Verlängerung des Reaktorgefäßes wegzunehmen, sodass dieses aus dem Reaktor herausgezogen werden kann. Es ist ferner eine Kopplungseinrichtung vorgesehen, mit der der reaktorseitige Abschnitt des Einbringschachtes und ein der Probenzuführeinrichtung zugeordneter Abschnitt des Einbringschachtes lösbar, jedoch gasdicht miteinander verbunden werden können.

Weitere Vorteile und Einzelheiten der vorliegenden Erfindung ergeben sich aus der nachfolgenden Beschreibung eines Ausführungsbeispiels in Verbindung mit der Zeichnung. In dieser zeigen:
- Figur 1: eine schematische Darstellung der wesentlichen Komponenten einer Analyseeinrichtung für die Elementaranalyse nach DUMAS;
- Figur 2: eine teilweise geschnittene perspektivische Darstellung des oberen Teils der Analyseeinrichtung in einer ersten Position des Verschlusselementes;
- Figur 3: eine Darstellung gemäß Figur 2 in einer zweiten Position des Verschlusselementes;
- Figur 4: eine perspektivische, teilweise geschnittene Seitenansicht des oberen Teils mit einer anderen Schnittebene als Figur 2 und 3;
- Figur 5: eine Querschnittsansicht des oberen Teils der Zuführeinrichtung Z;
- Figur 6: eine Seitenansicht eines Ausführungsbeispiels einer Einrichtung zum Bewegen der Probenzuführeinrichtung in einer Gebrauchsstellung;
- Figur 7: die Darstellung nach Figur 5 in einer Nicht-Gebrauchsstellung;
- Figur 8: eine Draufsicht auf ein Ausführungsbeispiel einer Kopplungseinrichtung;
- Figur 9: eine teilweise geschnittene perspektivische Seitenansicht des Ausführungsbeispiels der Kopplungseinrichtung nach Figur 7;
- Figur 10: eine perspektivische Stirnseitenansicht der Kopplungseinrichtung nach den Figuren 7 und 8;
- Figur 11: eine Draufsicht auf eine Variante der Kopplungseinrichtung K,
- Figur 12: eine perspektivische Schnittansicht der Variante nach Figur 11
- Figur 13: eine teilweise Draufsicht auf die Grundplatte eines modifizierten Ausführungsbeispiels;
- Figur 14: eine perspektivische Seitenansicht einer Hülse des modifizierten Ausführungsbeispiels und
- Figur 15: eine Darstellung gemäß Figur 2 des modifizierten Ausführungsbeispiels.

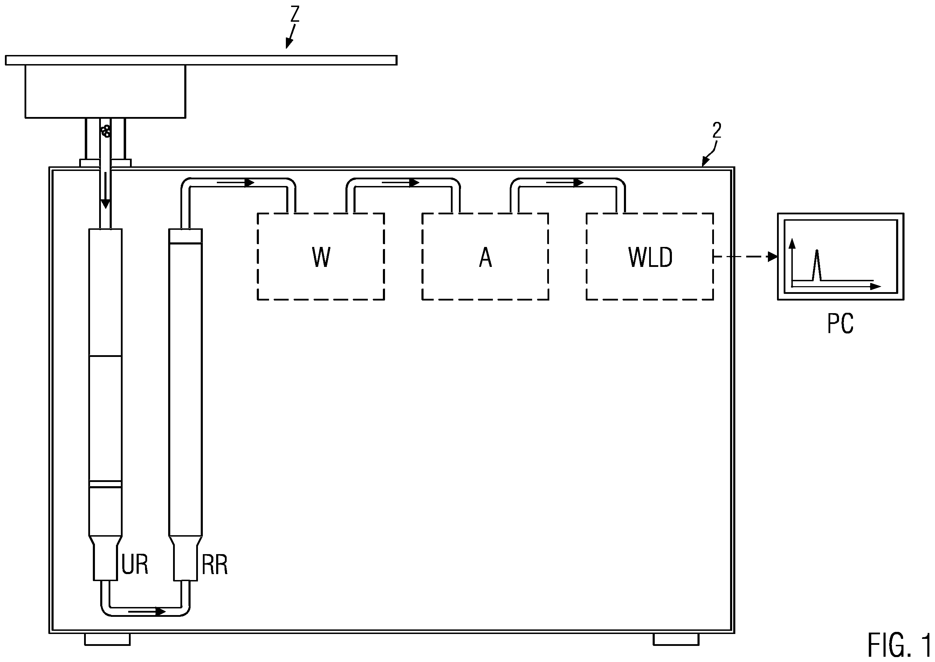

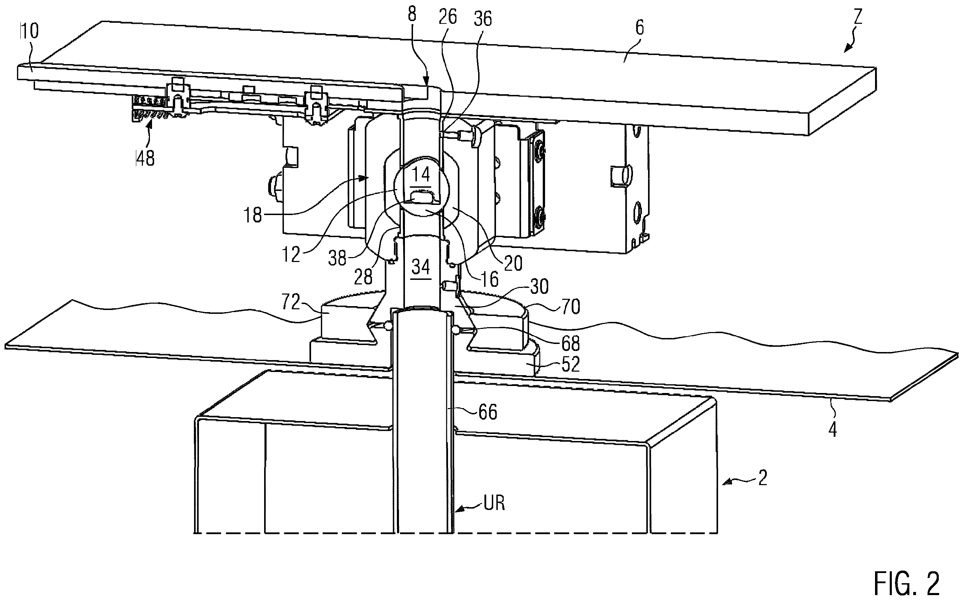

Die Figur 1 zeigt ein Ausführungsbeispiel einer Analyseeinrichtung mit einem Reaktor UR für eine katalytische Verbrennung. Die dabei entstehenden Gase werden einem Reduktionsreaktor RR zugeführt, der insbesondere NOₓ zu N₂ reduziert. Danach wird in dem Verbrennungsgas enthaltenes Wasser H₂O adsorbiert. In dem Gas enthaltenes CO₂ wird danach aus dem Gas entfernt. Schließlich wird der Stickstoffgehalt gemessen (bei WLD) und zwar üblicherweise durch Messen der Wärmeleitfähigkeit des hindurchgeleitenden Gases. Der gemessene Wert wird über einen Rechner (PC) analysiert und ausgegeben. Das in Fig. 2 eingezeichnete Analyseeinrichtungsgehäuse 2 nimmt die Reaktoren auf. Die nachstehend beschriebene Probenzuführeinrichtung ist in Figur 1 mit Großbuchstaben Z gekennzeichnet und wird nachstehend unter Bezugnahme auf die Figuren 2 ff. erläutert.

Oberhalb des Analyseeinrichtungsgehäuses 2 befindet sich eine Halteplatte 4, ist, die jedoch von Wärmequellen innerhalb des Analyseeinrichtungsgehäuses 2 bestmöglich thermisch entkoppelt ist.

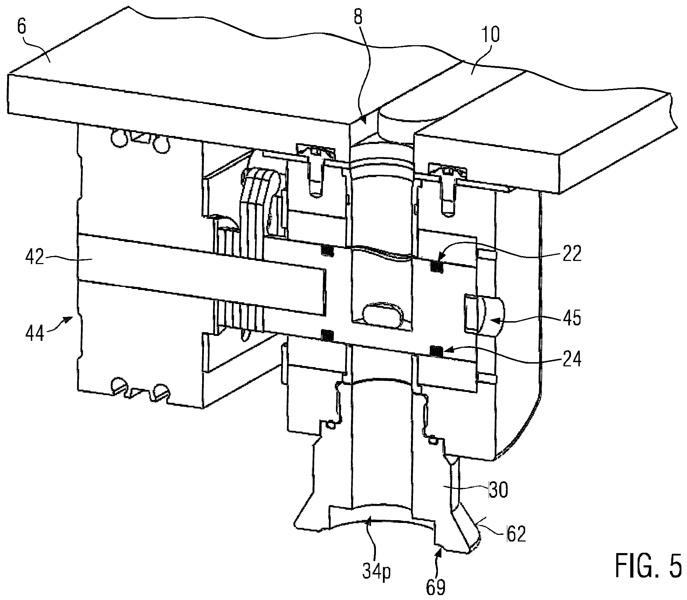

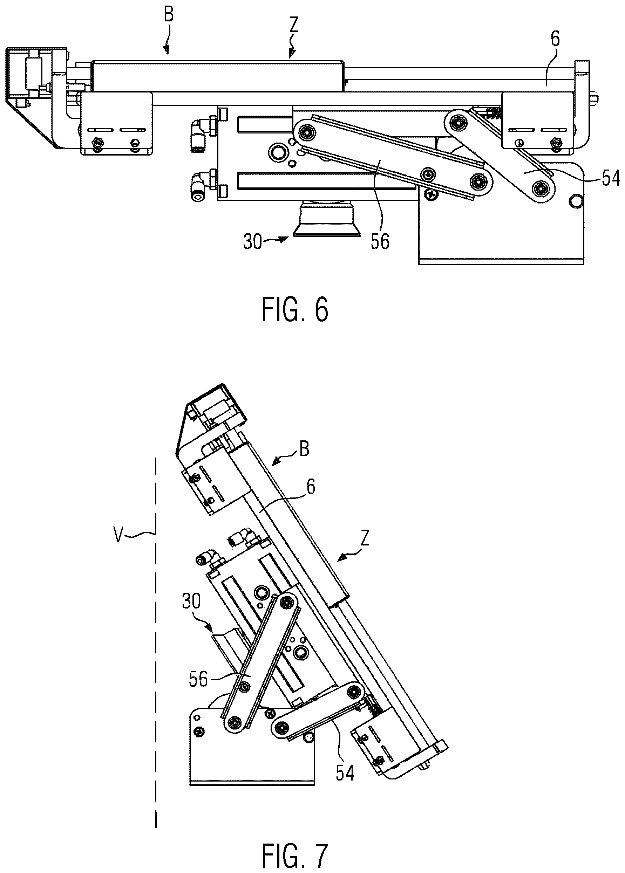

Die Halteplatte 4 kann Bestandteil eines Maschinengestells sein, auf das nachstehend lediglich unter Bezugnahme auf die Figuren 5 und 6 kurz eingegangen wird.

Dieses Maschinengestell trägt auch die Probenzuführeinrichtung Z, die in Figur 2 verdeutlicht ist. Die Probenzuführeinrichtung Z hat eine Grundplatte 6, in der eine Einbringöffnung 8 ausgespart ist. Der Einbringöffnung 8 ist ein innerhalb der Ebene der Grundplatte 6 verschieblich gelagerter Schieber 10 zugeordnet, der in Figur 2 teilweise geschnitten dargestellt ist. Unterhalb der Einbringöffnung 8, d. h. im Schwerefeld der Erde darunterliegend befindet sich eine Verschlusselement 12, das im Wesentlichen als Zylinder ausgebildet ist und im Innern eine Probenaufnahmekammer 14 ausbildet, die mit einem Boden 16 verschlossen ist. Die Probenaufnahmekammer 14 geht von der zylindrischen Umfangsfläche des Verschlusselementes 12 ab. Das Verschlusselement 12 ist verschwenkbar in einem Verschlusselementgehäuse 18 gelagert. Das Verschlusselement 12 und das Verschlusselementgehäuse 18 bestehen aus Messing.

Zwischen dem Verschlusselementgehäuse 18 und dem Verschlusselement 12 ist eine Dichtung in Form eines Dichtkörpers 20 aus Viton vorgesehen, der sich über die gesamte axiale Verstreckung des Verschlusselementes 12 erstreckt und dieses Verschlusselement im Wesentlichen vollumfänglich umgibt. Der Dichtkörper 20 befindet sich demnach zwischen dem Verschlusselementgehäuse 18 und dem Verschlusselement 12. Viton ist ein Beispiel für ein Fluorelastomer, welches eine hohe thermische und chemische Beständigkeit hat und sich auch bei höheren Temperaturen nicht auflöst.

Wie Figur 5 verdeutlicht, sind an dem Außenumfang des Verschlusselementes 12 zwei in Umfangsrichtung umlaufende Nuten 22 ausgespart, die eine Silikonpaste 24 als Schmierpaste in sich aufnehmen. Dadurch wird die Verschwenkbewegung des Verschlusselementes 12 in den Dichtkörper 20 geschmiert.

Die Figuren 2, 3 und 5 verdeutlichen jeweils oberhalb und unterhalb der Probenaufnahmekammer 14 vorgesehene Edelstahlhülsen. Eine erste Edelstahlhülse 26 erstreckt sich von der Unterseite der Grundplatte 6 bis zu dem Verschlusselement 12 und ist oben gerade und unten konkav abgeschnitten, sodass die Kontur der ersten Edelstahlhülse 26 an ihrem unteren Ende der Krümmung des Verschlusselementes 12 entspricht. In entsprechender Weise ist das obere Ende einer mit Bezugszeichen 28 gekennzeichneten zweiten Edelstahlhülse an die Krümmung des zylindrischen Verschlusselementes 12 angepasst. Das untere Ende der zweiten Edelstahlhülse 28 stößt an das obere Ende eines Übergangsstücks 30, das mit dem Verschlusselementgehäuse 18 unter Zwischenlage einer Dichtung verschraubt ist. Dieses Übergangsstück 30 hat mehrere Nuten 32 zum Einleiten eines Transportgases in einen mit Bezugszeichen 34 gekennzeichneten Einbringschacht, wobei die Nuten 32 mit einer nicht gezeigten Leitung für ein solches Transportgas kommuniziert. Oberhalb des Verschlusselementes 12 ist der Einbringschacht 34 mit einer Spülöffnung 36 für ein Inertgas versehen. Diese Spülöffnung 36 kommuniziert mit den in der Edelstahlhülse 26 eingestochenen Nuten. Die Nuten führen das Spülgas zum unteren Ende der Edelstahlhülse 26 und es dort in den Einbringschacht 34.

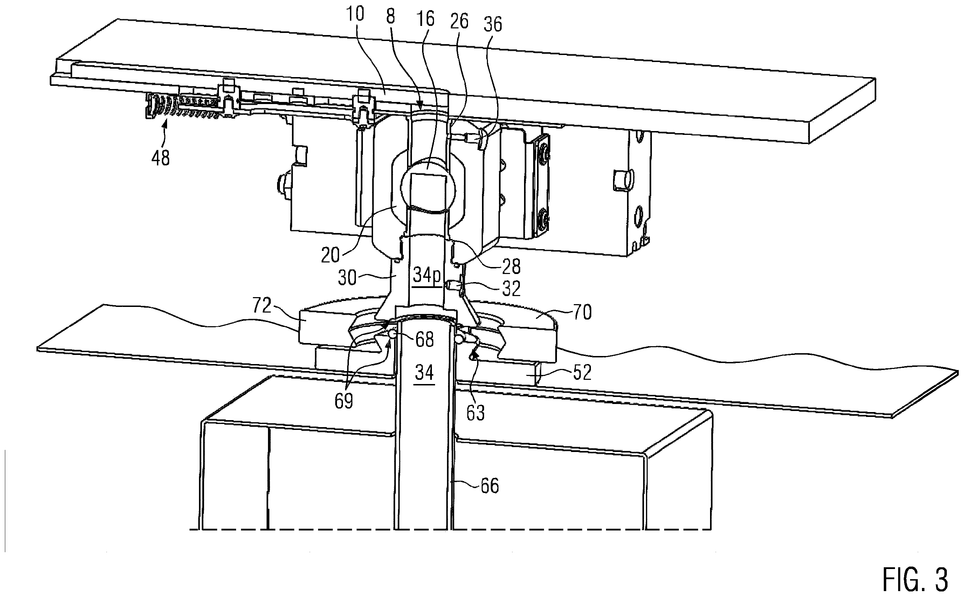

Der Einbringschacht 34 hat einen der Probenzuführeinrichtung Z zugeordneten Abschnitt 34p und einen reaktorseitigen Abschnitt 34r (vgl. Figur 3).

In Figur 2 befindet sich das Verschlusselement 12 in einer ersten Position, in welcher der Boden 16 der Probenaufnahmekammer 14 den Einbringschacht 34 unterseitig verschließt. So ist die Probenaufnahmekammer 14 zu der Einbringöffnung 8 hin offen und kann eine von oben abgeworfene Probe aufnehmen, die in Figur 2 mit Bezugszeichen 38 gekennzeichnet ist und sich auf dem Boden 16 der Probenaufnahmekammer 14 befindet.

In Figur 3 ist das Verschlusselement 12 um 180° in die zweite Position gedreht. Der Boden 16 verschließt den oberen Abschnitt des Einbringschachtes 34. Die Probenaufnahmekammer 14 kommuniziert mit dem unteren Abschnitt des Einbringschachtes 34 und dementsprechend mit dem Reaktor UR.

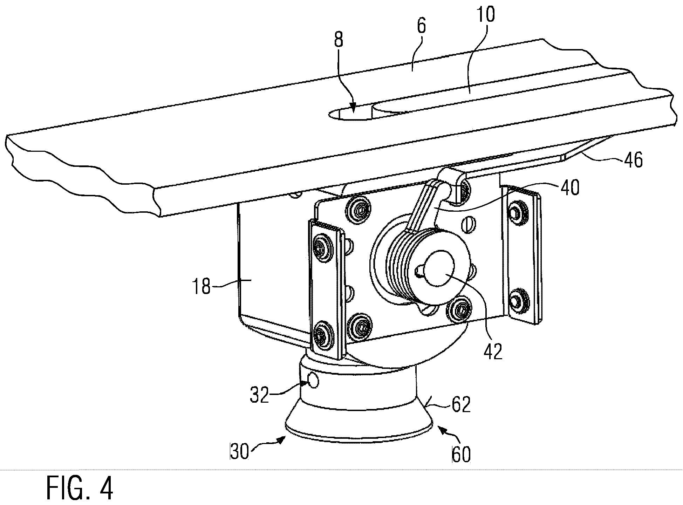

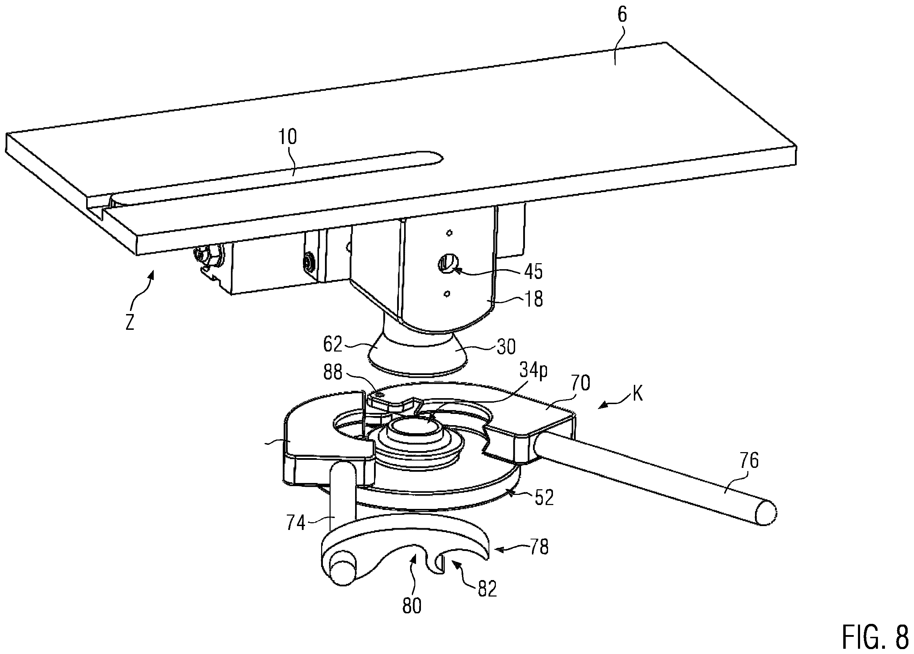

Die Figur 4 verdeutlicht einen Mitnehmer 40, der verdrehfest mit einer Welle 42 verbunden ist, die die Verschwenkbewegung des Verschlusselementes 12 vermittelt und über einen Antrieb 44 angetrieben ist. Bezugszeichen 45 kennzeichnet Funktionsflächen an einer freien Stirnfläche des Verschlusselementes 12 zum Eingriff eines Schraubendrehers (vgl. Figuren 5 und 8) Über einen Betätigungsarm 46, der mit dem Schieber 10 verbunden ist, wird der Schieber 10 mit der Verschwenkbewegung der Welle 42 zwangsgeführt. Dabei ist der Schieber 10 über eine Feder 48 in Richtung auf seine Verschlussstellung, d. h. in Richtung auf die Einbringöffnung 8 vorgespannt gehalten. In Figur 2 ist die Feder komprimiert; in Figur 3 demgegenüber expandiert.

Zum Abwerfen einer Probe wird diese über eine Zuführeinrichtung beispielsweise gemäß EP 3 112 859 B1 über die Einbringöffnung 8 verbracht. Der Antrieb 44 wird angetrieben, um das Verschlusselement 12 von der zweiten Position in die erste Position zu verbringen. Dabei nimmt der Mitnehmer 40 den Schieber 10 mit. Die Einbringöffnung 8 kommuniziert infolgedessen mit der Probenaufnahmekammer 14. Die Probe 38 fällt in die Probenaufnahmekammer 14. Durch die Spülöffnung 36 wird Inertgas in den oberen Bereich des Einbringschachtes 34 und die Probenaufnahmekammer 14 eingebracht. Die entsprechenden Räume werden geflutet. Umgebungsluft wird aus dem Verschlusselementgehäuse 18 vollständig entfernt und durch das Inertgas ersetzt. Während das Inertgas durch die Spülöffnung 36 eingebracht wird, wird das Verschlusselement 12 von der ersten Stellung gemäß Figur 2 in die zweite Stellung gemäß Figur 3 verbracht. Die Probe 38 fällt aufgrund der Schwerkraft von der Probenaufnahmekammer 14 in Richtung auf den Reaktor UR und wird dort verbrannt.

Die Figuren 6 und 7 zeigen eine Einrichtung zum Bewegen der Probenzuführeinrichtung Z. Wie Figur 2 erkennen lässt, ist das Übergangsstück 30 über Klauen 70, 72 mit einem darunter befindlichen Kopplungsstück 52 in einer noch nachstehend beschriebenen Weise verbunden. Das Lösen der entsprechenden Verbindung ermöglicht ein Verschwenken der Zuführeinrichtung Z in der in Figuren 6 und 7 verdeutlichten Art. Dafür ist die Grundplatte 6 mit den daran angeordneten Aggregaten über zwei Gelenkarme 54, 56 gegenüber einer nicht mehr dargestellten Unterkonstruktion, die die Halteplatte 4 umfassen kann, abgestützt. Die Zuführeinrichtung Z zusammen mit der Grundplatte 6 können so verschwenkt werden, dass diese außerhalb einer mit gestrichelten Linien angedeuteten axialen Verlängerung V des rohrförmigen Reaktors UR befindlich sind (vgl. Figur 7). So kann der Reaktor UR aus dem Analyseeinrichtungsgehäuse 2, speziell dem Reaktor UR gezogen und durch einen neuen ersetzt werden.

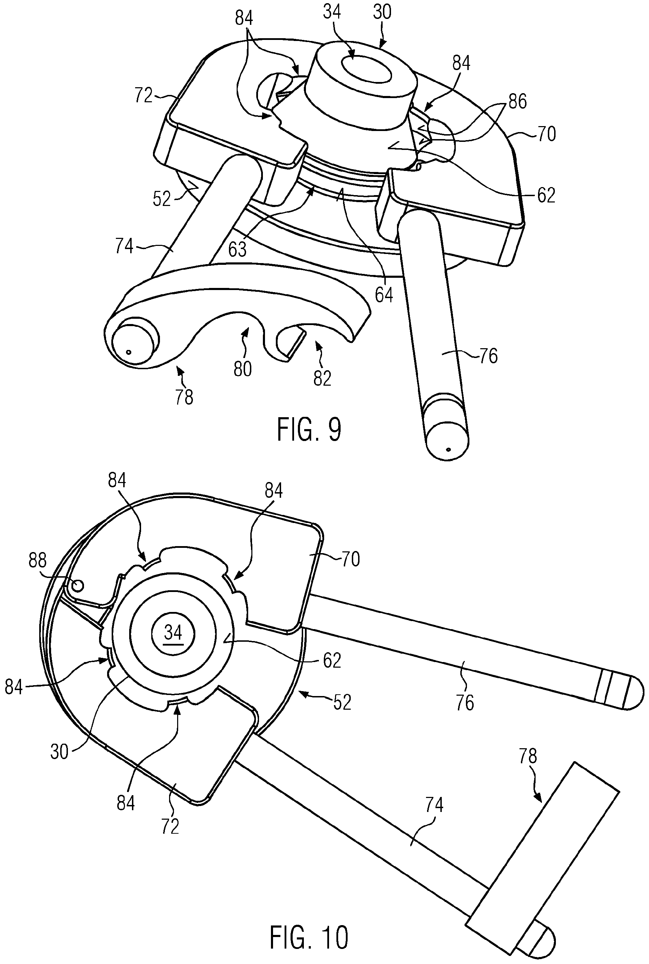

Die im Anschluss wiederherzustellende gasdichte Verbindung wird nachstehend insbesondere unter Bezugnahme auf die Figuren 8 bis 10 erläutert.

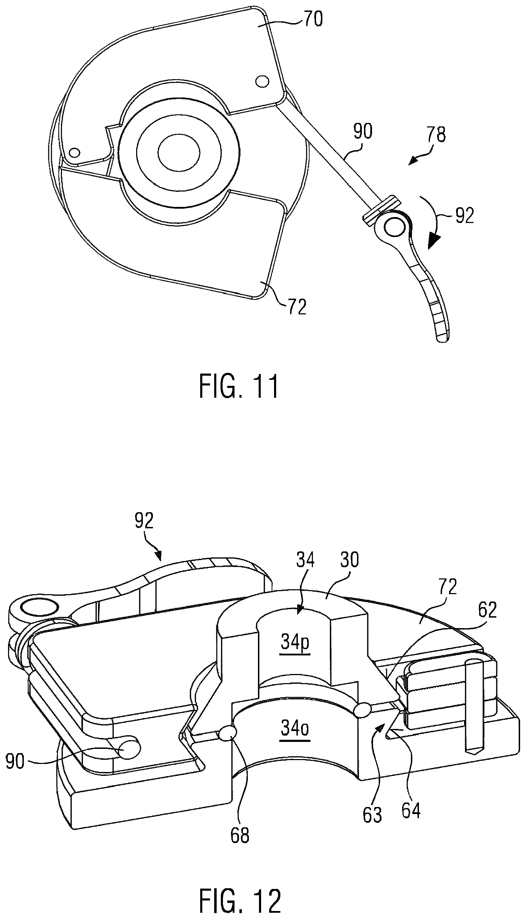

Das Übergangsstück 30 bildet ein freies unteres Ende des der Probenzuführeinrichtung Z zugeordneten Abschnitt 34p des Einbringschachtes 34 aus. Das untere freie Ende des Übergangsstücks 30 ist nach Art eines Konus ausgebildet. Der mit Bezugszeichen 60 gekennzeichnete Konus bildet eine in Umfangsrichtung durchgehende Schrägfläche 62 aus, die nach oben und damit von dem freien Ende des Übergangsstücks 30 wegweist. Bei dem gezeigten Ausführungsbeispiel hat das Kopplungsstück 52 ebenfalls einen Konus 63, der von dem entsprechenden oberen freien Ende des Kopplungsstücks 52 wegweist und eine derart ausgerichtete Schrägfläche 64 (vgl. auch Figur 12) ausbildet. Das Kopplungsstücks 52 umgibt einen dem Reaktor UR zugeordneten Abschnitt 34r des Einbringschachtes 34.

Das Übergangsstück 30 vergrößert in seinem untersten Bereich den Einbringschacht 34 und ist zur Aufnahme eines mit Bezugszeichen 66 gekennzeichneten Glasrohres angepasst ausgebildet, welches mit dem Reaktor UR Material gefüllt ist (vgl. Figuren 2 und 3). Im gefügten Zustand, der nachstehend noch näher erläutert werden wird, ist dieses Glasrohr 66 innerhalb eines Dichtringes 68 vorgesehen, der zwischen dem Übergangsstück 30 und dem Kopplungsstück 52 geklemmt ist. Dazu befindet sich der Dichtring 68 in konkav geformten Mulden 69, deren Kontur im Wesentlichen der Außenkontur des Dichtringes 68 entspricht, und zwar nicht nur im Hinblick auf den Durchmesser des Dichtringes 68, sondern auch im Hinblick auf die umfängliche Kontur desselben.

Wie die Figuren 8 bis 10 vermitteln, hat die hier verdeutlichte und mit Bezugszeichen K gekennzeichnete Kopplungseinrichtung zwei Klauen 70, 72, die abgesehen von der Ausbildung eines Gelenks im Wesentlichen identisch ausgebildet und mit Betätigungsarmen 74, 76 versehen sind. Dabei trägt der mit Bezugszeichen 74 gekennzeichnete Betätigungsarm ein Festlegungselement 78. Das Festlegungselement 78 hat eine erste zur Aufnahme des Betätigungsarms 76 angepasst ausgebildete Mulde 80 und an seinem freien Ende eine zweite Mulde 82.

Die Klauen 70, 72 haben jeweils zwei innenumfänglich abragende Gegenflächenabschnitte 84, die einander zugerichtete und nach innen weisende Keilflächen 86 ausbilden. Die Gegenflächenabschnitte 84 sind zur Anlage gegen die Schrägflächen 62, 64 angepasst ausgebildet. Zur thermischen Entkopplung der Klauen 70, 72 gegenüber den Schrägflächen 62, 64 greifen die Klauen 70, 72 jedoch lediglich über einen geringen Umfangsabschnitt an dem Übergangsstück 30 beziehungsweise dem Kopplungsstück 52 an.

Bei dem gezeigten Ausführungsbeispiel haben die Schrägflächen 62, 64 in etwa die gleiche Neigung wie die Keilflächen 86 es sind aber auch Ausführungen denkbar bei denen die Neigung der Schrägflächen die der Keilflächen übersteigt. Die Oberflächen der Keilflächen 86 und/oder die Schrägflächen 62, 64 können zur Verringerung der Reibung mit Teflon beschichtet sein. Die Klauen 70, 72 sowie das Übergangsstück 30 und das Kopplungsstück 52 sind aus Messing gefertigt.

Die Klauen 70, 72 sind jeweils verschwenkbar um einen Gelenkzapfen 88 gelagert, der ortsfest an der Halteplatte 4 oder dem Kopplungsstück 52 abgestützt ist. Die Klauen 70, 72 sind nicht nur verschwenkbar, sondern auch axial beweglich gegenüber diesem Gelenkzapfen 88. So können die Klauen 70, 72 bei der Annäherung an die Schrägflächen 62, 64 einer etwaigen Annäherung des Übergangsstücks 30 in Richtung auf das Kopplungsstück 52 folgen.

Zum Verschwenken der Zuführeinrichtung Z mit der Grundplatte 6 mag der Betätigungsarm 76 in die zweite Mulde 82 des Festlegungselementes 78 eingebracht werden. Dadurch wird ein gewisser radialer Abstand der beiden Klauen 70, 72 zueinander eingestellt, der es ermöglicht, den Konus 60 zwischen den Klauen 70, 72 hindurch nach oben herauszuführen und von dem Reaktor UR zu beabstanden. Durch Verschwenken der Zuführeinrichtung Z wird die in Figur 7 gekennzeichneten Stellung erreicht, in der es möglich ist, das Reaktorrohr des Reaktors UR aus dem Innern der Analysevorrichtung bzw. dem Reaktor UR herauszuziehen. Nach dem Austausch des Reaktorrohres wird das Übergangsstück 30 wieder dem Reaktor UR angenähert.

Der aus EPDM bestehende Dichtring 68 wird dabei zwischen dem Übergangsstück 30 und dem Kopplungsstück 52 geklemmt. Die beiden Betätigungsarme 74, 76 werden aufeinander zugeschwenkt, und zwar üblicherweise durch einhändige Betätigung an den beiden Betätigungsarmen 74, 76. Dabei legen sich die Keilfläche 86 gegen die Schrägflächen 62, 64. Es ergibt sich durch die Schrägstellung der Schrägflächen dabei nicht nur eine radiale Kraft, sondern auch eine axiale Kraft, die das Übergangsstück 30 in axialer Richtung näher an Kopplungsstück 52 bringt.

Da die Klauen 70, 72 axial verschieblich an dem Gelenkzapfen 88 gelagert sind, können die Klauen dieser Bewegung ungehindert folgen. Der Dichtring 68 wird komprimiert und an den Außenumfang des Glasrohres 66 gelegt. Dadurch ist eine gasdichte Verbindung zwischen der Zuführeinrichtung Z und dem Reaktor UR und damit den beiden Abschnitten 34p, 34r des Einbringschachtes 34 geschaffen. Auch wird das Glasrohr 66 zu den metallischen Flächen von Übergangsstück 30 und Kopplungsstück 52 beabstandet und somit mechanisch und thermisch davon entkoppelt. Die Klemmung wird dadurch gesichert, dass der Betätigungsarm 74 in die erste Mulde 80 des Festlegungselementes 78 eingelegt und dort verriegelt wird.

Die Erfindung ist nicht auf das gezeigte Ausführungsbeispiel nach den Figuren 8 bis 10 beschränkt. Eine alternative Ausgestaltung eines Festlegungselementes 78 ist in den Figuren 11 und 12 gezeigt. Dort sind die beiden Klauen 70, 72 auch über einen Kniehebel unter Vorspannung gehalten, der in Figur 11 am Ende einer Spannstange 90 vorgesehen und mit Bezugszeichen 92 gekennzeichnet ist. Die andere der Klauen 72 kann an ihrem dem Gelenkzapfen 88 entfernten Ende einen Schlitz aufweisen, in welchen die Spannstange 90 eingebracht werden kann, sodass der Kniehebel 92 gegen eine äußere Wangenfläche der anderen Klaue 72 angelegt und dagegen verspannt werden kann (vgl. Figur 12).

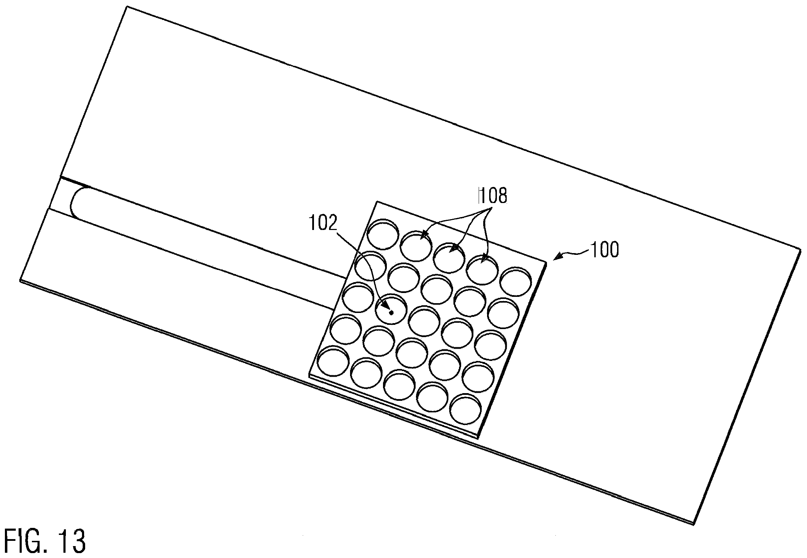

Die Figuren 13-15 verdeutlichen eine Abwandlung des zuvor beschriebenen Ausführungsbeispiels, die eine verbesserte Spülung des Einbringschachtes 34 sowie der als nächstes einzubringenden Probe verdeutlicht, die in einem Probenhalter 100 aufgenommen ist, der über eine mit Bezugszeichen B gekennzeichnete Betätigungseinrichtung parallel zu der Oberfläche der Grundplatte 6 bewegt werden kann und in den Figuren 6 und 7 gezeigt ist. Das Ausführungsbeispiel folgt insofern dem Vorschlag gemäß EP 3 112 859 B1. Der Probenhalter 100 stützt sich über Teflonfüße gegenüber der Oberfläche der Grundplatte 6 ab, so dass der Probenhalter 100 um wenige Hundertstel Millimetern mit seiner flächigen Unterseite gegenüber der Grundplatte 6 angehoben ist.

Bei dem modifizierten Ausführungsbeispiel hat der Schieber 10 eine Spülbohrung 102, die im geschlossenen Zustand des Schiebers 10 mittig über dem Einbringschacht 34 angeordnet ist.

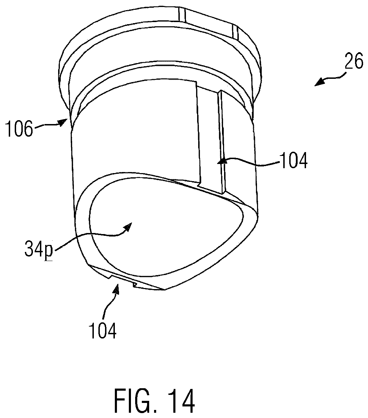

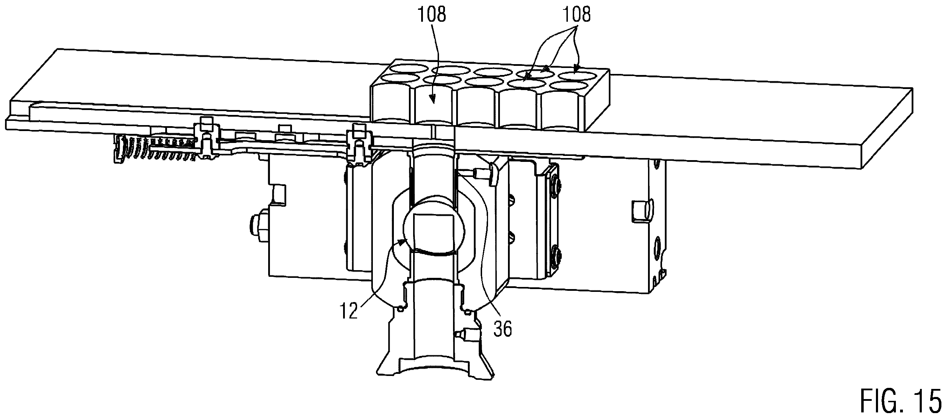

Wie sich aus den Figuren 14 und 15 ergibt, ist bei dem hier gezeigten Ausführungsbeispiel die obere, erste Edelstahlhülse 26 modifiziert. Sie hat an ihrem Außenumfang an gegenüberliegenden Seiten je eine Längsnut 104, die an dem unteren Ende der ersten Edelstahlhülse 26 frei ausläuft und an ihrem oberen Ende in eine Umfangsnut 106 mündet. Im montierten Zustand der ersten Edelstahlhülse 26 befindet sich diese Umfangsnut 106 auf Höhe der Spülöffnung 36.

Nach Abwerfen einer Probe und in der in Figur 15 gezeigten zweiten Stellung wird bei diesem modifizierten Ausführungsbeispiel der gesamte der Probenzuführeinrichtung Z zugeordnete Abschnitt 34p des Einbringschachtes 34 gespült. Dazu wird über die Spülöffnung 36 Spülgas eingeleitet. Dieses verteilt sich umfänglich über die Umfangsnut 106 und wird im Folgenden über die beiden Längsnuten 104 nach unten geführt. Das Spülgas tritt am unteren Ende der ersten Edelstahlhülse 26 in den Einbringschacht 34 ein und überstreicht dabei die Außenumfangsfläche des Verschlusselementes 12. Aufgrund des nachfließenden Spülgases steigt das Spülgas in dem Einbringschacht 34 nach oben und durchsetzt schließlich die Spülbohrung 102. Das die Spülbohrung 102 durchsetzende Spülgas tritt in eine Probenabwurfkammer 108 ein, die oberhalb der Spülbohrung 102 vorgesehen und durch Probenhalter 100 gebildet ist. Nachfolgendes Spülgas spült schließlich auch die entsprechende Abwurfkammer 108 vollständig, so dass vor dem Abwerfen der nächsten Probe durch Öffnen des Schiebers 10 etwaige Atmosphären- und Fremdgase, die die Messung verfälschen können, aus der Probenabwurfkammer 108 entfernt sind.

Durch das geringe Spaltmaß zwischen dem Probenhalter 100 und der Oberfläche der Grundplatte 6 strömt das Spülgas auch in diejenigen Probenabwurfkammern 108, die benachbart zu derjenigen Probenabwurfkammer 108 vorgesehen sind, die sich exakt über dem Einbringschacht 34 befindet.

Durch die Längsnut 104 und die Umfangsnut 106 ist zwischen der Edelstahlhülse 26 und dem Verschlusselementgehäuse 18 eine Spülführung ausgebildet, die an dem Verschlusselement 12 endet und durch dieses begrenzt ist. So wird sichergestellt, dass das Spülgas am unteren Ende der Probenzuführeinrichtung Z zugeordneten Abschnitts 34p des Einbringschachtes 34 eingeleitet wird und entgegen der Zuführrichtung der Probe den gesamten Zuführschacht 34 zumindest bis zur Einbringöffnung 8 überstreicht.

### Bezugszeichenliste

- 2: Analyseeinrichtungsgehäuse
- 4: Halteplatte
- 6: Grundplatte
- 8: Einbringöffnung
- 10: Schieber
- 12: Verschlusselement
- 14: Probenaufnahmekammer
- 16: Boden
- 18: Verschlusselementgehäuse
- 20: Dichtkörper
- 22: Nut
- 24: Silikonpaste
- 26: erste Edelstahlhülse
- 28: zweite Edelstahlhülse
- 30: Übergangsstück
- 32: Bohrung
- 34: Einbringschacht
- 34p: der Probenzuführeinrichtung zugeordneter Abschnitt des Einbringschachts
- 34r: reaktorseitiger Abschnitt des Einbringschachts
- 36: Spülöffnung
- 38: Probe
- 40: Mitnehmer
- 42: Welle
- 44: Antrieb
- 45: Funktionsflächen
- 46: Betätigungsarm
- 48: Feder
- 52: Kopplungsstück
- 54: Gelenkarm
- 56: Gelenkarm
- 60: Konus
- 62: Schrägfläche
- 63: Konus
- 64: Schrägfläche
- 66: Glasrohr
- 68: Dichtring
- 69: Mulde
- 70: Klaue
- 72: Klaue
- 74: Betätigungsarm
- 76: Betätigungsarm
- 78: Festlegungselement
- 80: erste Mulde
- 82: zweite Mulde
- 84: Gegenflächenabschnitt
- 86: Keilfläche
- 88: Gelenkzapfen
- 90: Spannstange
- 92: Kniehebel
- 100: Probenhalter
- 102: Spülbohrung
- 104: Längsnut
- 106: Umfangsnut
- 108: Probenabwurfkammer
- B: Bewegungseinrichtung
- K: Kopplungseinrichtung
- UR: Reaktor
- RR: Reduktionsreaktor
- V: Verlängerung
- K: Kopplungseinrichtung
- PC: Prozessor/Rechner
- WLD: Stickstoffgehaltmessung
- Z: Zuführeinrichtung

## Patentansprüche

1. Analyseeinrichtung für die Elementaranalyse mit einer Probenzuführeinrichtung (Z) mit einer Einbringöffnung (8) zum Einbringen einer Probe (38), einer Leitung für Sauerstoff und Inertgas, einem Reaktor (UR) für die katalytische Verbrennung der Probe (38), einem stromabwärts des Reaktors (UR) vorgesehenen Reduktionsreaktor (RR), einer stromabwärts des Reduktionreaktors (RR) vorgesehenen Wasserfalle (W), einem stromabwärts der Wasserfalle (W) vorgesehenen Adsorber (A), einem stromabwärts des Absorbers vorgesehenen Detektor und einer Logikeinheit zur Verarbeitung der von dem Detektor übermittelten Daten, wobei in Einbringrichtung hinter der Einbringöffnung (8) ein zu dem Reaktor (UR) führender Einbringschacht (34) vorgesehen ist,
**dadurch gekennzeichnet,**
**dass** in dem Einbringschacht (34) ein Verschlusselement (12) mit einer einseitig verschlossenen Probenaufnahmekammer (14) verschwenkbar gelagert ist, wobei in einer ersten Position des Verschlusselementes (12) die Probe (38) durch die Einbringöffnung (8) in die Probenaufnahmekammer (14) einbringbar ist und ein Boden (16) der Probenaufnahmekammer (14) den Einbringschacht (34) unterseitig verschließt und in einer zweiten Position des Verschlusselementes (12), in der das Verschlusselement (12) gegenüber der ersten Position so verschwenkt ist, dass die Probenaufnahmekammer (14) zu dem Reaktor (UR) offen ist und der Boden (16) den Reaktor (UR) gegenüber der Einbringöffnung (8) verschließt, dass die Analyseeinrichtung einen Mitnehmer (40) und einen Schieber (10) umfasst, dass das Verschlusselement (12) drehfest mit dem Mitnehmer (40) verbunden ist, und dass der Schieber (10) verschieblich in einer mit der Einbringöffnung (8) versehenen Grundplatte (6) geführt und derart mit dem Mitnehmer (40) gekoppelt ist, dass der Schieber (10) in der ersten Position des Verschlusselementes (12) die Einbringöffnung (8) freilässt und in der zweiten Position des Verschlusselementes (12) die Einbringöffnung (8) verschließt.

2. Analyseeinrichtung nach einem der vorherigen Ansprüche, **dadurch gekennzeichnet, dass** das Verschlusselement (12) in einem Verschlusselementgehäuse (18) gelagert ist und dass zwischen dem Verschlusselement (12) und dem Verschlusselementgehäuse (18) eine Dichtung (20) vorgesehen ist.

3. Analyseeinrichtung nach Anspruch 2, **dadurch gekennzeichnet, dass** das Verschlusselement (12) schwenkbar in einem Dichtkörper (20) aus einem Fluorelastomer gelagert ist.

4. Analyseeinrichtung nach Anspruch 2 oder 3, **dadurch gekennzeichnet, dass** der Einbringschacht (34) zumindest teilweise durch eine Edelstahlhülse (26, 28) gebildet ist, die die Dichtung (20) durchsetzt.

5. Analyseeinrichtung nach Anspruch 4, **dadurch gekennzeichnet, dass** eine erste Edelstahlhülse (26) zwischen der Einbringöffnung (8) und dem Verschlusselement (12) vorgesehen ist.

6. Analyseeinrichtung nach Anspruch 4 oder 5, **dadurch gekennzeichnet, dass** eine zweite Edelstahlhülse (28) in Einbringrichtung hinter dem Verschlusselement (12) vorgesehen ist.

7. Analyseeinrichtung nach einem der vorherigen Ansprüche, **dadurch gekennzeichnet, dass** das Verschlusselement (12) zumindest eine an seinem Außenumfang ausgesparte Nut (22) aufweist, die mit einer Schmierpaste (24) ausgefüllt ist.

8. Analyseeinrichtung nach einem der vorherigen Ansprüche, **dadurch gekennzeichnet, dass** zwischen der Einbringöffnung (8) und dem Verschlusselement (12) eine Spülöffnung (36) zum Einbringen eines Inertgases vorgesehen ist.

9. Analyseeinrichtung nach Ansprüche 4 und 8, **dadurch gekennzeichnet, dass** zwischen dem Verschlusselementgehäuse (18) und einer zwischen der Einbringöffnung (8) und dem Verschlusselement (12) vorgesehenen und den Einbringschacht (34) zumindest teilweise ausbildenden Hülse (26) eine Spülführung (104, 106) ausbildet ist, die mit der Spülöffnung (36) kommuniziert und unterseitig durch das Verschlusselement (12) begrenzt ist.

10. Analyseeinrichtung nach einem der vorherigen Ansprüche, **dadurch gekennzeichnet, dass** der Schieber (10) von einer Spülbohrung (102) durchsetzt ist.

11. Analyseeinrichtung nach einem der vorherigen Ansprüche mit einer Kopplungseinrichtung (K), **dadurch gekennzeichnet, dass** der Einbringschacht (34) zwischen der Probenzuführeinrichtung (Z) und dem Reaktor (UR) trennbar ist, dass die Probenzuführeinrichtung (Z) zum Freilegen eines reaktorseitigen Abschnitts (34r) des Einbringschachts (34) relativ zu dem Reaktor (UR) beweglich ist und dass der reaktorseitige Abschnitt (34r) des Einbringschachts (34) und ein der Probenzuführeinrichtung zugeordneter Abschnitt (34p) des Einbringschachts (34) über die Kopplungseinrichtung (K) miteinander verbindbar sind.

## Claims

1. An analyzer device for elemental analysis comprising a sample supply device (Z) having an insertion opening (8) for inserting a sample (38), a line for oxygen and for inert gas, a reactor (UR) for catalytic combustion of the sample (38), a reduction reactor (RR) provided downstream of the reactor (UR), a water trap (W) provided downstream of the reduction reactor (RR), an adsorber (A) provided downstream of the water trap (W), a detector provided downstream of the absorber and a logic unit for processing the data transmitted by the detector, wherein an insertion shaft (34) leading to the reactor (UR) is provided downstream of the insertion opening (8) in the direction of insertion, **characterized in that**
a closing element (12) comprising a sample receiving chamber (14) closed on one side is pivotably mounted in the insertion shaft (34), wherein in a first position of the closing element (12) the sample (38) can be inserted through the insertion opening (8) into the sample receiving chamber (14) and a bottom (16) of the sample receiving chamber (14) closes the insertion shaft (34) on the underside, and in a second position of the closing element (12), in which the closing element (12) is pivoted relative to the first position in such a way that the sample receiving chamber (14) is open towards the reactor (UR) and the bottom (16) closes the reactor (UR) with respect to the insertion opening (8), **in that** the analyzer device comprises a driver (40) and a slider (10), **in that** the closing element (12) is non-rotatably connected to the driver (40) and **in that** the slider (10) is displaceably guided in a base plate (6) provided with the insertion opening (8) and is coupled to the driver (40) in such a way that the slider (10) leaves the insertion opening (8) open in the first position of the closing element (12) and closes the insertion opening (8) in the second position of the closing element (12).

2. The analyzer device according to any one of the preceding claims, **characterized in that** the closing element (12) is mounted in a closing element housing (18) and **in that** a seal (20) is provided between the closing element (12) and the closing element housing (18).

3. The analyzer device according to claim 2, **characterized in that** the closing element (12) is pivotably mounted in a sealing body (20) made of a fluoroelastomer.

4. The analyzer device according to claims 2 or 3, **characterized in that** the insertion shaft (34) is at least partially formed by a stainless steel sleeve (26, 28) penetrating the seal (20).

5. The analyzer device according to claim 4, **characterized in that** a first stainless steel sleeve (26) is provided between the insertion opening (8) and the closing element (12).

6. The analyzer device according to claims 4 or 5, **characterized in that** a second stainless steel sleeve (28) is provided behind the closing element (12) in the direction of insertion.

7. The analyzer device according to any one of the preceding claims, **characterized in that** the closing element (12) has at least one groove (22) recessed on its outer circumference which is filled with a lubricating paste (24).

8. The analyzer device according to any one of the preceding claims, **characterized in that** a purge opening (36) for introducing an inert gas is provided between the insertion opening (8) and the closing element (12).

9. The analyzer device according to claims 4 and 8, **characterized in that** a purge conduit (104, 106) is formed between the closing element housing (18) and a sleeve (26) which is provided between the insertion opening (8) and the closing element (12) and at least partially forms the insertion shaft (34), wherein it communicates with the purge opening (36) and is bounded on its underside by the closing element (12).

10. The analyzer device according to any one of the preceding claims, **characterized in that** the slide (10) is penetrated by a purge bore (102).

11. The analyzer device according to any one of the preceding claims comprising a coupling device (K), **characterized in that** the insertion shaft (34) is separable between the sample feed device (Z) and the reactor (UR), **in that** the sample feed device (Z) is movable relative to the reactor (UR) to expose a reactor-side section (34r) of the insertion shaft (34), and **in that** the reactor-side section (34r) of the insertion shaft (34) and a section (34p) of the insertion shaft (34) assigned to the sample feed device can be connected via the coupling device (K).

## Revendications

1. Dispositif d'analyse pour l'analyse élémentaire, comprenant un dispositif d'alimentation d'échantillon (Z) présentant un orifice d'introduction (8) permettant d'introduire un échantillon (38), une conduite pour de l'oxygène et du gaz inerte, un réacteur (UR) pour la combustion catalytique de l'échantillon (38), un réacteur de réduction (RR) fourni en aval du réacteur (UR), un piège à eau (W) fourni en aval du réacteur de réduction (RR), un adsorbeur (A) fourni en aval du piège à eau (W), un détecteur fourni en aval de l'absorbeur et une unité logique permettant le traitement des données transmises par le détecteur, dans lequel un puits d'introduction (34) menant au réacteur (UR) est fourni au sein du dispositif d'introduction derrière l'orifice d'introduction (8),
**caractérisé en ce que**
un élément de fermeture (12) avec une chambre de réception d'échantillon (14) fermée d'un côté est monté pivotant dans le puits d'introduction (34), dans lequel, dans une première position de l'élément de fermeture (12), l'échantillon (38) peut être introduit dans la chambre de réception d'échantillon (14) par l'orifice d'introduction (8) et un fond (16) de la chambre de réception d'échantillon (14) ferme le puits d'introduction (34) par en bas et, dans une deuxième position de l'élément de fermeture (12) dans laquelle l'élément de fermeture (12) est pivoté par rapport à la première position, la chambre de réception d'échantillon (14) est ouverte vers le réacteur (UR) et le fond (16) ferme le réacteur (UR) par rapport à l'orifice d'introduction (8), **en ce que** le dispositif d'analyse comprend un entraîneur (40) et un coulisseau (10), **en ce que** l'élément de fermeture (12) est relié de manière solidaire en rotation à l'entraîneur (40), et **en ce que** le coulisseau (10) est guidé de manière coulissante dans une plaque de base (6) munie de l'orifice d'introduction (8) et est couplé à l'entraîneur (40) de telle manière que le coulisseau (10) libère l'orifice d'introduction (8) dans la première position de l'élément de fermeture (12) et ferme l'orifice d'introduction (8) dans la deuxième position de l'élément de fermeture (12).

2. Dispositif d'analyse selon l'une quelconque des revendications précédentes, **caractérisé en ce que** l'élément de fermeture (12) est monté dans une enveloppe d'élément de fermeture (18) et **en ce qu'**un joint d'étanchéité (20) est fourni entre l'élément de fermeture (12) et l'enveloppe d'élément de fermeture (18).

3. Dispositif d'analyse selon la revendication 2, **caractérisé en ce que** l'élément de fermeture (12) est monté pivotant dans un corps d'étanchéité (20) en élastomère fluoré.

4. Dispositif d'analyse selon la revendication 2 ou 3, **caractérisé en ce que** le puits d'introduction (34) est formé au moins en partie par un manchon en acier inoxydable (26, 28) qui traverse le joint d'étanchéité (20).

5. Dispositif d'analyse selon la revendication 4, **caractérisé en ce qu'**un premier manchon en acier inoxydable (26) est fourni entre l'orifice d'introduction (8) et l'élément de fermeture (12).

6. Dispositif d'analyse selon la revendication 4 ou 5, **caractérisé en ce qu'**un deuxième manchon en acier inoxydable (28) est fourni derrière l'élément de fermeture (12) dans la direction d'introduction.

7. Dispositif d'analyse selon l'une quelconque des revendications précédentes, **caractérisé en ce que** l'élément de fermeture (12) présente au moins une rainure (22) évidée sur sa périphérie extérieure et remplie d'une pâte lubrifiante (24).

8. Dispositif d'analyse selon l'une quelconque des revendications précédentes, **caractérisé en ce qu'**un orifice de rinçage (36) permettant l'introduction d'un gaz inerte est fourni entre l'orifice d'introduction (8) et l'élément de fermeture (12).

9. Dispositif d'analyse selon les revendications 4 et 8, **caractérisé en ce qu'**un guide de rinçage (104, 106) communiquant avec l'orifice de rinçage (36) et délimité par en bas par l'élément de fermeture (12), est formé entre l'enveloppe d'élément de fermeture (18) et un manchon (26) qui est fourni entre l'orifice d'introduction (8) et l'élément de fermeture (12) et qui constitue au moins partiellement le puits d'introduction (34).

10. Dispositif d'analyse selon l'une quelconque des revendications précédentes, **caractérisé en ce que** le coulisseau (10) est traversé par un trou de rinçage (102).

11. Dispositif d'analyse selon l'une quelconque des revendications précédentes, comprenant un dispositif de couplage (K), **caractérisé en ce que** le puits d'introduction (34) peut être séparé entre le dispositif d'alimentation d'échantillon (Z) et le réacteur (UR), **en ce que** le dispositif d'alimentation d'échantillon (Z) peut être déplacé par rapport au réacteur (UR) afin d'exposer une section (34r), située côté réacteur, du puits d'introduction (34) et **en ce que** la section (34r), située côté réacteur, du puits d'introduction (34) et une section (34p), associée au dispositif d'alimentation d'échantillon, du puits d'introduction (34) peuvent être reliées l'une à l'autre par l'intermédiaire du dispositif de couplage (K).
